# EUROPÄISCHE PATENTSCHRIFT

(11) **EP 0 852 177 B1**
(45) Veröffentlichungstag und Bekanntmachung des Hinweises auf die Patenterteilung: **15.09.1999**
(21) Anmeldenummer: 97120963.0
(22) Anmeldetag: 28.11.1997
(51) Int. Cl.: B29C 45/16, G01C 25/00

(54) **Verfahren und Spritzguss-Werkzeug zur Herstellung von Wasserwaagen-Libellen**
Method and injection mould for manufacturing vials for spirit levels
Procédé et moule d'injection pour fabriquer des fioles pour niveaux à bulle

(30) Priorität: 06.12.1996 DE 19650684
(43) Veröffentlichungstag der Anmeldung: 08.07.1998
(73) Patentinhaber: Bayerische Mass-Industrie Arno Keller GmbH, 91211 Hersbruck (DE)
(72) Erfinder: Keller, Hans, 91217 Hersbruck (DE); Hubert, Ralf, 90765 Fürth (DE)
(74) Vertreter: Götz, Georg, Dipl.-Ing.

(56) Entgegenhaltungen:
- EP-A- 0 075 887
- CH-A- 205 611
- FR-A- 1 019 163
- US-A- 5 651 186

## Beschreibung

Die Erfindung betrifft ein Herstellungsverfahren für eine Wasserwaagen-Libelle, deren Körper einen Hohlraum zur Aufnahme einer eine Gasblase enthaltenden Flüssigkeit aufweist und ein oder mehrere Markierungen trägt, die der Gasblase zugeordnet sind, wobei die Methode des Spritzgießens verwendet wird, indem in die Kavität des Oberteils eines Spritzgieß-Formwerkzeugs eine transparente Materialkomponente für den Libellenkörper zur Bildung des Hohlraums um einen Kern des Formwerkzeug-Unterteils gespritzt wird. Ferner betrifft die Erfindung ein zur Durchführung des Verfahrens geeignetes Spritzguß-Werkzeug, dessen Formorgan mit einem wenigstens eine oder mehrere Kavitäten aufweisenden Oberteil und einem den Kern aufweisenden Unterteil versehen ist.

Es ist bekannt (vgl. EP 0 455 979 B1), den Libellenkörper durch Spritzen eines glasklaren Blocks zu erzeugen, wobei der Hohlraum für die die Gasblase enthaltende Flüssigkeit mittels eines Kerns im Formwerkzeug der Spritzgußmaschine gebildet wird. Im Wege der Zwangsentformung wird dann der Libellenkörper entfernt, und die Markierungsringe, die dem Erkennen der Lage der Gasblase dienen, werden von außen aufgedruckt. Dies erfordert einen zusätzlichen Arbeitsgang, gleichwohl sind die Markierungsringe nicht kratzfest angebracht. Alternativ ist es bekannt, die Markierungsringe für die Gasblase an der Hohlraum-Innenwandung der Libelle auszubilden. Dies wird in der Regel mittels manuellem Einlegen von Drahtringen realisiert. Diese mechanische Nachbearbeitung ist nicht nur zeitaufwendig, sondern beeinträchtigt auch die optischen Eigenschaften, insbesondere die Durchsichtigkeit, des Libellenkörpers.

Ferner ist ein Herstellungsverfahren für Wasserwaagen-Libellen bekannt (EP 0 075 887 A1), bei dem in einer Doppelspritzgußmaschine zunächst um einen Zapfen ein Kern aus lichtundurchlässigem, thermoplastischem Material gespritzt wird. Bei diesem Vorgang werden gleichzeitig zwei ringförmige Vorsprünge am Außenumfang des Kerns geformt. Diese Vorsprünge sind dazu bestimmt, Markierungsringe für die Libellenblase zu bilden. Im nächsten Schritt wird der so gestaltete Kern in eine zweite Spritzgußstation verbracht, worin der Libellenkörper auf transparentem Material mit niedrigerer Schmelztemperatur aufgebracht wird. Nach dem Abkühlen wird der Zapfen aus dem Kern herausgezogen, wobei dieser so zusammenfallen kann, daß er aus dem Inneren des Libellenkörpers ebenfalls herausziehbar ist. Die ringartigen Vorsprünge zur Bildung der Markierung werden dabei vom Grundkörper des herauszuziehenden Kerns abgetrennt und verbleiben im Libellenkörper. Dabei entstehen allerdings rauhe Abreißstellen, welche bei der späteren Benutzung der Wasserwaage die Blasenbewegung in der Libelle leicht stören können. Um dies zu vermeiden, wäre eine zusätzliche mechanische Nachbehandlung der Innenfläche der Libelle notwendig.

Der Erfindung liegt die Aufgabe zugrunde, bei einem Herstellungsverfahren von Wasserwaagen-Libellen Arbeitsschritte zu vermeiden, die nur weitgehend manuell realisierbar sind. Insbesondere soll die Notwendigkeit mechanischer Nachbearbeitungen im Hohlraum der Libelle entfallen können, weil dies insbesondere die Oberflächentransparenz verschlechtern könnte. Zur Lösung dieser Aufgabe wird erfindungsgemäß auf das im Patentanspruch 1 definierte Herstellungsverfahren verwiesen. Zu dessen Durchführung ist das im Anspruch 10 definiert Spritzguß-Werkzeug geeignet. Wegen weiterer Ausgestaltungen des erfindungsgemäßen Verfahrens oder Werkzeugs wird auf die abhängigen Ansprüche verwiesen.

Zwar ist es bei einem Herstellungsverfahren für mehrfarbige Kunststoffteile bekannt (FR 1 019 163 A), auf einer Kunststoffscheibe erzeugte Erhebungszonen mit andersartigem oder andersfarbigem Material über gezielt hingeführte Leitungen zu bespritzen. Jedoch sind diese Leitungen auf die Stirnseite der Kunststoffscheibe gerichtet. Eine Übertragung dieser Konfiguration auf die Herstellung von Libellenmarkierungen ist wegen der dort andersgelagerten geometrischen Umstände nicht möglich.

Das erfindungsgemäße Konzept besteht also darin, zur Bildung der Kombination 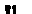 Libellenkörper mit Markierungen, insbesondere in Ringform," für den Libellenkörper-Hohlraum das 2-Komponenten-Spritzgießverfahren anzuwenden. Dadurch wird die Möglichkeit eröffnet, daß für die beiden Materialkomponenten Kunststoffe verwendet werden können, die sich über Adhäsion, Aufspritzen, Verschweißen, Ineinandermischen und/oder Interdiffusion miteinander fest und unverrückbar verbinden können. Wegen der entsprechenden physikalisch-chemischen Vorgänge wird auf DE-Sonderdruck JAROSCHEK, C. et Al.: 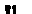 Harte und weiche Kunststoffe beim Spritzgießen kombinieren", Carl Hansa Verlag, Kohlberger Str. 22, 81679 München, verwiesen. Durch die innige Verbindung des Markierungskunststoffes mit dem sonstigen Libellenkörper-Kunststoff ist eine unveränderliche Anordnung der Markierungen gegenüber dem Libellenkörper und der darin befindlichen Gasblase gewährleistet und diese Anordnung ist auch robust gegenüber äußeren Umgebungseinflüssen und mechanischem Abrieb.

Indem ferner bei Spritzgießmaschinen für das 2-Komponenten-Verfahren leicht mehrere Plastifiziereinheiten integriert werden können, lassen sich zumindest zeitlich abgestuft der Libellenkörper und dessen Markierungen vollautomatisch in einer einzigen Spritzgießmaschine erzeugen, ohne daß zusätzliche, insbesondere manuelle Arbeitsgänge notwendig wären. Vor allem können mechanische Nachbearbeitungen, vor allem das nachträgliche Ausdrehen der Markierungsringe am Libellenkörper, was dessen Oberflächentransparenz verschlechtert, entfallen.

Auf der Basis der Erfindung bestehen mehrere Möglichkeiten, bezüglich der Mittelachse des Libellenkörpers und dessen meist zylindrischen Hohlraums die Libellenlkörper-Materialkomponente und die Markierungs-Materialkomponente in ihrer Relativlage zueinander anzuordnen: Einerseits kann die Materialkomponente für die Markierung zuerst um den Unterteil- bzw. Formwerkzeug-Kern und danach die Libellenkörper-Materialkomponente darum gespritzt werden, so daß letztere die erstgenannte Materialkomponente von außen umgibt. Damit sind etwa erzeugte Markierungsringe in rationeller Weise an der Innenwandung des Libellenkörper-Hohlraums angeordnet und demgemäß vor (manuellem) Abrieb von außen besonders geschützt. Zum anderen ist auch die umgekehrte Vorgehensweise zweckmäßig, so daß etwa gespritzte Markierungsringe in die Außenwandung des Libellenkörpers eingelassen sind und dabei diesen von außen umgeben. Diese Anordnung ist zweckmäßig, um eine besonders gute Sichtbarkeit der Markierungen zu erzielen.

Zur Minimierung oder Vermeidung des Parallaxen-Fehlers beim schrägen Draufsehen auf die Gasblase in der Libelle ist eine Ausbildung der Erfindung vorteilhaft, nach der die erste und die zweite Materialkomponente für den Libellenkörper und die Markierungen beim Spritzgußvorgang so zueinander angeordnet werden, daß das Markierungsmaterial die mit der ersten Materialkomponente gebildete Wandung für den Libellenkörper von außen nach innen bis zu dessen Hohlraum durchsetzt. Hierdurch ist eine durchgehende Markierung von der Außenwandung des Libellenkörpers zu dessen Hohlraum und Flüssigkeit mit Gasblase gegeben, anhand dessen das menschliche Auge die Gasblasen-Lage exakt offen und feststellen kann.

Eine zweckmäßige Ausgestaltung des erfindungsgemäßen Verfahrens besteht darin, den auf den Kern des Unterteils gespritzten 2-Komponenten-Libellenkörper von dem Kern im Wege der Zwangsentformung zu lösen. Dies ist vor allem dann möglich, wenn die Wandung des Libellekörpers nicht zu dick ist und die Zwangsentformung noch in einer Phase erfolgt, in der die Libellenkörper-Materialkomponente noch ausreichend warm, weich, elastisch und/oder verformbar ist. Alternativ kann das Lösen vom Kern erfolgen, indem dieser 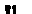 zerfällt" (Zerfallskern). Als Realisierung dafür ist es bekannt, daß der Kern aus Segmenten gebildet ist, die sich nach Vollendung des Spritzgießvorgangs zusammenziehen.

Ein Spritzguß-Werkzeug der eingangs genannten Art, das spezifisch für die Durchführung des erfindungsgemäßen Verfahrens angepaßt ist, zeichnet sich dadurch aus, daß an der Wandung der Oberteil-Kavität ein oder mehrere, jeweils frei nach innen (in der Kavität) endende Vorsprünge oder Vertiefungen ausgebildet sind, deren Form und/oder Kontur denjenigen der einem oder mehreren Markierungen entspricht, wobei die Vorsprünge oder Vertiefungen zur Bildung ringartiger Hohlräume entweder in der Kavitätswandung oder in der für den Libellenkörper auf den Kern gespritzten Materialkomponente gestaltet sind.

Um der zweckmäßigen Aufteilung des Spritzgußvorgangs in wenigstens zwei Phasen für die eine und die andere Materialkomponente der Libelle Rechnung zu tragen, ist eine besondere Ausbildung des erfindungsgemäßen Werkzeugs dahingehend zweckmäßig, daß die Kavität im Oberteil von wenigstens zwei aufeinander zu und voneinander weg bewegbaren Schiebeelementen begrenzbar und verschließbar ist, welche die Vorsprünge oder Vertiefungen aufweisen.

Weitere Einzelheiten, Merkmale, Wirkungen und Vorteile auf der Basis der Erfindung ergeben sich aus den Patentansprüchen, der nachfolgenden Beschreibung bevorzugter Ausführungsbeispiele der Erfindung sowie den Zeichnungen. Diese zeigen schematisch in;
- Fig. 1 u. 2: jeweils eine Schnittansicht für unterschiedliche Herstellunsphasen eines ersten Ausführungsbeispiels der Erfindung,
- Fig. 3 u. 4: jeweils in einer Schnittansicht entsprechende Herstellungsphasen für ein zweites Ausführungsbeispiel der Erfindung,
- Fig. 5: eine Schnittansicht für die Herstellungsweise nach einer dritten Ausbildung der Erfindung,
- Fig. 6: in Seitenansicht das Oberteil eines erfindungsgemäßen Spritzguß-Formwerkzeugs, und
- Fig. 7: eine Stirnansicht auf das Unterteil des erfindungsgemäßen Formwerkzeugs.

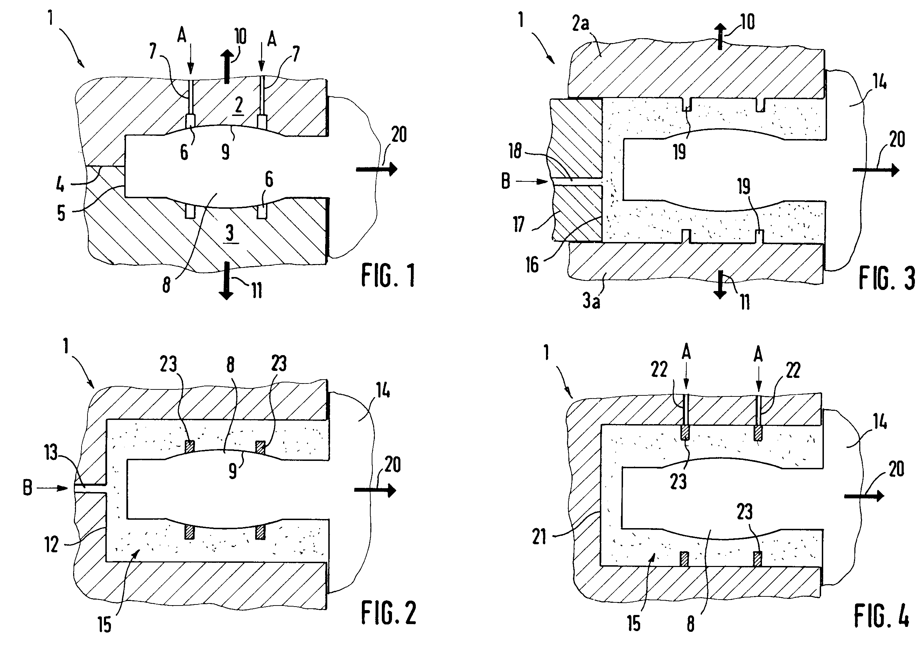

Gemäß Fig. 1 weist das erfindungsgemäße Spritzguß-Formwerkzeug ein Oberteil 1 auf, das aus zwei Schiebehälften 2, 3 aus metallischem Material zusammengesetzt ist. Im dargestellten Zustand sind die beiden Schiebehälften 2, 3 gerade zusammengefahren, so daß sie über eine Stoßnaht 4 aneinanderliegen. Diese endet an einer Kavität 5, welche von den Schieberhälften nebst ihren in ihrer Wandung vertieften Ringnuten 6 begrenzt ist. Zu den Ringnuten führt jeweils ein Einspritzkanal 7, der mit einem Reservoir für eine gefärbte, dunkle Werkstoff- bzw. Materialkomponente A verbunden ist.

Entsprechend einer ersten Herstellungsphase befindet sich in der über die beiden Schieberhälften 2, 3 geschlossenen Kavität 5 ein zum Werkzeug-Unterteil gehörender, metallischer Kern 8, der in seinem mittleren Längsabschnitt eine leicht tonnenförmige Ausbauchung 9 nach radial außen besitzt. Diese Anordnung ist dazu bereit, daß über die Einspritzkanäle 7 die Materialkomponente A in die ringnutartigen Teile der Kavität 5 gedrückt wird, die von den Ringnuten 6 der Schieberhälften 2, 3 gebildet und begrenzt sind. Diese ringnutartigen Hohlraumteile umlaufen den Kern 8, und beim Einspritzen der Materialkomponente A entstehen dunkle Ringe, die bei der später fertig hergestellten Libelle als Markierungsringe zur Lageprüfung der Gasblase dienen.

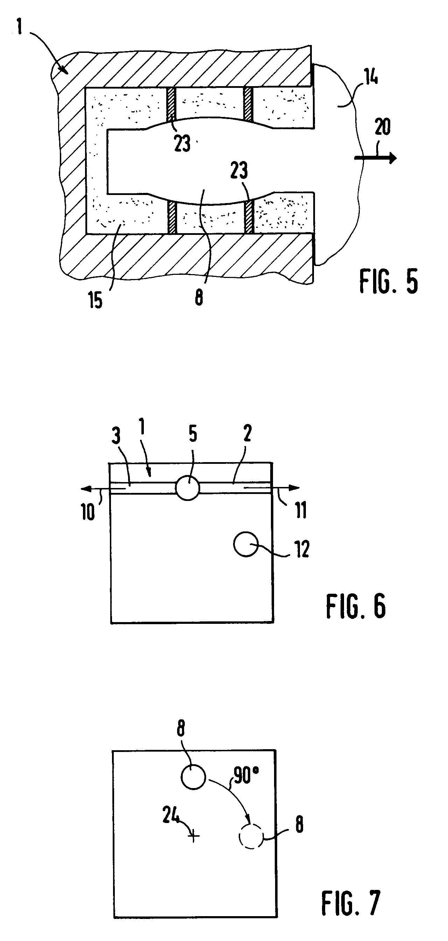

Entsprechend einer zweiten Herstellungsphase werden den beiden Schieberhälften 2, 3 einanderentgegensetzte Schiebebewegungen 10, 11 erteilt, wodurch die Spritzgußform auseinandergezogen und geöffnet wird. Der Kern 8 mit den ringartig umlaufenden, aufgespritzten Materialkomponenten A kann aus der geöffneten Kavität 5 gezogen und zur nächsten Kavität 12 (vgl. Fig. 2) verstellt werden (vgl. Fig. 7).

Entsprechend einer dritten Herstellungsphase, die in Fig. 2 veranschaulicht ist, fährt das Werkzeug-Unterteil mit Kern 8 und darauf umlaufenden Ringen aus der Materialkomponente A wieder in das Oberteil und dort in die zweite Kavität 12, die beispielsweise stirnseitig über einen weiteren Einspritzkanal 13 mit einem Reservoir für eine transparente Materialkomponente B verbunden ist. Die Anordnung ist dazu bereit, daß über den Einspritzkanal 13 die transparente Materialkomponente B zur Bildung eines block- oder quaderartigen Libellenkörpers in die zweite Kavität 12 hineingespritzt wird, die hierzu eine entsprechend gestaltete Hüllfläche aufweist. Dabei werden die ringförmigen dunklen Materialkomponententeile A von der transparenten Materialkomponente B umgeben, so daß sich beim späteren Enderzeugnis innenliegende, an dem Libellenkörper-Hohlraum für die Gasblase angrenzende Markierungsringe ergeben, die eine dunklere Farbe als die umgebende Materialkomponente B aufweisen. Der die zweite Kavität 12 umgebende Bereich des Oberteils 1 kann einstückig ausgeführt und mittels einer Anschlagerweiterung 14 am hinteren Ende des Kerns 8 verschließbar sein.

Entsprechend einer vierten Herstellungsphase wird nun die zweite Kavität durch Herausziehen des Kerns 8 mit seiner hinteren, pilzartigen Anschlagerweiterung 14 geöffnet, und der nun fertig mit Markierungsringen 23 dunkler Materialkomponente A erzeugte Libellenkörper kann vom Unterteil-Kern 8 beispielsweise über Zwangsentformung gelöst werden.

Vom obigen, ersten Ausführungsbeispiel unterscheidet sich das zweite Ausführungsbeispiel nach Fig. 3 und 4 vor allem dadurch, daß die obigen ersten und dritten Herstellungsphasen hier in ihrer Reihenfolge vertauscht sind: Gemäß Fig. 3 sind die Schiebehälften 2, 3 zur Begrenzung der Längsseiten einer weiteren (dritten) Kavität 16 auf Anschlag an die Kavitätsstirnwand 17 zusammengefahren. Das entgegengesetzte Ende wird von der Anschlagerweiterung 14 (wie oben bei Fig. 2) begrenzt, so daß die Kavität 16 allseitig abgegrenzt ist. Diese Anordnung dient dazu, daß die zur Bildung des Libellenkörpers vorgesehene, transparente Materialkomponente B über einen Einspritzkanal 18, welcher von einem Reservoir für die Materialkomponente B durch die Kavitätsstirnwand 17 zur Kavität 16 führt, darin unter Druck eingepreßt wird. Um in einer späteren Herstellungsphase ringartig um den Libellenkörper-Hohlraum umlaufende Markierungsringe 23 dunklerer Materialkomponente A in die Außenwandung des Libellenkörpers 15 einlassen zu können, sind an der Schieberwandung ringartig umlaufende Vorsprünge 19 vorgesehen, deren radiale und axiale Abmessungen den zu bildenden Markierungsringen 23 entsprechen.

Entsprechend der zweiten Herstellungsphase wird die Anordnung nach Fig. 3 aufgelöst, indem den Schieberhälften 2a, 3a einander entgegengesetzte Schiebebewegungen 10, 11 - entsprechend obiger Fig. 1 - erteilt werden. Aus der geöffneten Kavität 16 wird nun dem Kern 8 eine daraus herausführende Bewegung 20 erteilt, wobei dieser von tranparenter Materialkomponente B für den Libellenkörper mit ringnutartigen Vertiefungen in der Außenwandung der Materialkomponente B umgeben ist.

In einer weiteren Herstellungsphase wird gemäß Fig. 4 dieser aus der Kavität 16 gemäß Fig. 3 herausgezogene Kern in eine weitere Kavität 21 eingeführt, die von einem einstückigen Oberteil-Abschnitt sowie der Kern-Anschlagerweiterung 14 begrenzt ist. Der Oberteil-Bereich 1 gemäß Fig. 4 ist von Einspritzkanälen 22 durchsetzt, die je einer Ringnut im Libellenkörper 15 für dunklere Markierungs-Materialkomponente A zugeordnet sind. Die Einspritzkanäle 22 sind im Abstand voneinander und in ihrer axialen Stellung so plaziert, daß sich ihre Ausgänge mit der jeweiligen Lage einer Ringnut für Materialkomponente A decken. Mit anderen Worten, die axialen Stellungen der Ringnutvorsprünge 19 gemäß Fig. 3 und der Einspritzkanäle 22 gemäß Fig. 4 sind einander kongruent bzw. deckungsgleich, und ihre jeweiligen axialen Abstände stimmen miteinander überein. In der dritten Herstellungsphase wird nun die dunklere Materialkomponente A durch die zugeordneten Einspritzkanäle 22 in die Ringnuten gedrückt, die beim Herstellungsschritt gemäß Fig. 3 durch die Schieber-Vorsprünge 19 gebildet worden sind. Damit sind für den Libellenkörper 15 die Markierungsringe 23 erzeugt.

Der Verhinderung von Parallaxen-Meßfehlern dient die Ausführung nach Fig. 5, die sich von den vorhergehenden dadurch unterscheidet, daß die Markierungsringe 23 mit der dunkelkontrastierenden Materialkomponente A im Libellenkörper 15 so erzeugt werden, daß sie dessen Wandung von der Außenseite zur Innenseite am Libellenkörper-Hohlraum bzw. am Kern 8 endend durchsetzen. Mit dieser Ausbildung wird ferner der Vorteil erzielt, daß sowohl das Verfahrensprinzip nach Fig. 1 und 2 als auch nach Fig. 3 und 4 grundsätzlich eingesetzt werden kann. Auf die obigen Ausführungen kann entsprechend verwiesen werden. Da die Markierungsringe 23 von der Außenseite des Libellenkörpers 15 nach innen zu dessen Hohlraum verlaufen, ist bei schrägem Draufsehen und damit einhergehendem, optisch vorgetäuschten Verbreitern der Ringe der Parallaxen-Meßfehler weitgehend vermieden.

In Fig. 6 ist die prinzipielle Gesamtstruktur des Werkzeug-Oberteils angedeutet: Den beiden Schieberhälften 2, 3 kann jeweils eine lineare Ein- oder Ausfahrbewegung 10, 11 zum Schließen bzw. Öffnen der ersten Kavität zur Bildung der Markierungsringe 23 gemäß Fig. 1 und 2 erteilt werden. In der Seitenansicht in Fig. 6 etwas schräg versetzt ist die zweite Kavität 12 angeordnet, die der Bildung des blockförmigen Libellenkörpers durch Umspritzen der transparenten Materialkomponente B um die ringförmige Materialkomponente A dient.

Entsprechend ist im in Fig. 7 gezeichneten Werkzeug-Unterteil der Kern 8 um eine senkrecht zur Zeichenebene verlaufende Achse 24 planetenartig im Winkelumfang von 90° zu verstellen. Die neue Stellung des Kerns 8, die der zweiten Kavität 12 in Fig. 6 zugeordnet ist, ist gestrichelt angedeutet.

Die in Fig. 6 dargestellte Anordnung der Kavitäten ist auch zur Durchführung des Verfahrensbeispiels nach Fig. 3 und 4 geeignet, in dem zur Begrenzung der oberen Kavität die Schieber 2a, 3a mit Ringvorsprüngen 19 eingesetzt werden, während die untere Kavität ein einfacher quaderartiger oder zylindrischer Hohlraum sein kann (entsprechend Fig. 4).

## Patentansprüche

1. Herstellungsverfahren für eine Wasserwaagen-Libelle, deren Körper (15) einen Hohlraum zur Aufnahme einer eine Gasblase enthaltenden Flüssigkeit aufweist und bezüglich einer Achse des Hohlraums versetzte Markierungen (23) trägt, die einer bestimmten Stellung der Gasblase zugeordnet sind, unter Verwendung des Spritzgießens, indem in die Kavität (5,12,16,21) des Oberteils (1) eines Spritzgieß-Formwerkzeugs eine transparente Materialkomponente (B) für den Libellenkörper (15) zur Bildung des Hohlraums um einen Kern (8) des Formwerkzeug-Unterteils gespritzt wird, und zur Erzeugung der Markierungen (23) eine zweite, farblich kontrastierende Materialkomponente (A) verwendet wird, die um den Kern (8) des Unterteils und/oder um den Hohlraum des Libellenkörpers (15) gespritzt wird, **dadurch gekennzeichnet, daß** die zweite Materialkomponente (A) in die für die Markierungen (23) vorgesehenen Bereiche mittels Einspritzkanäle (7,22) geführt wird, die das Oberteil (1) bezüglich der Achse des Kerns (8) und/oder Hohlraums radial durchsetzen und an dessen Innenwandung kongruent mit den axialen Abständen der Markierungsbereiche enden.

2. Verfahren nach Anspruch 1, dadurch gekennzeichnet, daß die erste Materialkomponente (B) für den Libellenkörper so angeordnet wird, daß sie die zweite Materialkomponente (A) für die eine oder mehreren Markierungen (23) umgibt.

3. Verfahren nach Anspruch 1, dadurch gekennzeichnet, daß die zweite Materialkomponente (A) für die Markierungen (23) so angeordnet wird, daß sie die erste Materialkomponente (B) für den Libellenkörper (15) umgibt.

4. Verfahren nach Anspruch 1, dadurch gekennzeichnet, daß die zweite Materialkomponente (A) für die Markierungen (23) so angeordnet wird, daß sie die aus der ersten Materialkomponente (B) gebildete Wandung für den Libellenkörper (15) von außen bis zu dessen Hohlraum durchsetzt.

5. Verfahren nach Anspruch 2 oder 4, dadurch gekennzeichnet, daß auf und/oder um den Kern (8) des Formwerkzeugs die Materialkomponente (A) für die Markierung (23) und danach die Materialkomponente (B) für den Libellenkörper (15) gespritzt werden.

6. Verfahren nach Anspruch 3 oder 4, dadurch gekennzeichnet, daß auf und/oder um den Kern (8) des Formwerkzeugs die Materialkomponente (B) für den Libellenkörper (15) und danach die Materialkomponente (A) für die Markierung (23) gespritzt werden.

7. Verfahren nach einem der vorangehenden Ansprüche, wobei ein Formwerkzeug mit zwei Oberteil-Kavitäten (5,12;16,21) je für die Form des Libellenkörpers (15) und dessen einer oder mehreren Markierungen (23) verwendet wird, gekennzeichnet durch eine erste Phase (Fig.1;Fig.3), in welcher in eine der beiden Kavitäten (5,12;16,21) der Kern (8) bewegt, diese erste Kavität (5;16) geschlossen und auf und/oder um den Kern (8) eine der beiden Materialkomponenten (A,B) gespritzt wird, durch eine zweite Phase, in welcher diese Kavität (5;16) geöffnet, daraus der Kern (8) mit der in der ersten Phase gespritzten Materialkomponente (A,B) gezogen und zur anderen Kavität ((12,21) verstellt wird, durch eine dritte Phase (Fig.2;Fig.4), in welcher der Kern (8) in die andere Kavität (12,21) bewegt, diese geschlossen und auf und/oder um den Kern (8) die andere Materialkomponente (B,A) gespritzt wird, und durch eine vierte Phase, in der die andere, zweite Kavität (12;21) geöffnet, daraus der Kern (8) mit den beiden Materialkomponenten (B,A) gezogen und von diesen gelöst wird.

8. Verfahren nach Anspruch 7, dadurch gekennzeichnet, daß das Lösen durch Zwangsentformung oder über Verkleinerung des Kerns (8) in seinem Volumen und/oder Umfang erfolgt.

9. Verfahren nach einem der vorangehenden Ansprüche, dadurch gekennzeichnet, daß für die beiden Materialkomponenten (A,B) **Kunststoffe** verwendet werden, die über Adhäsion, Aufspritzen, Verschweißen, Ineinandermischen und/oder Interdiffusion miteinander in Verbindung bringbar sind.

10. Spritzguß-Werkzeug für die Durchführung des Verfahrens nach einem der vorangehenden Ansprüche, dessen Formorgan mit einem wenigstens eine oder mehrere Kavitäten (5,12;16,21) aufweisenden Oberteil (1) und einem den Kern (8) aufweisenden Unterteil gebildet ist, dadurch gekennzeichnet, daß an der Wandung der Kavität mehrere, jeweils frei nach innen endende Vorsprünge (19) oder Vertiefungen (6) ausgebildet sind, deren Form, Lage und/oder Kontur denjenigen Markierungen (23) entspricht, wobei die Vorsprünge (19) oder Vertiefungen (6) zur Bildung ringartiger Hohlräume entweder in der Kavitätswandung (5,12;16,21) oder in der für den Libellenkörper (15) auf den Kern (8) gespritzten Materialkomponente (B) gestaltet sind.

11. Werkzeug nach Anspruch 10, dadurch gekennzeichnet, daß die Kavität (5;16) wenigstens mittels zweier aufeinander zu und voneinander weg bewegbarer (10,11) Schiebeelemente (2,3;2a,3a) verschließbar ist, welche die Vorsprünge (19) oder Vertiefungen (6) aufweisen und gegebenenfalls zur Begrenzung wenigstens der Längsseiten der Kavität (5;16) ausgebildet sind.

## Claims

1. Method of manufacture of a spirit level vial, whose body (15) has a cavity for receiving a fluid-containing glass bubble and bears markings, which are offset with respect to an axis of the cavity and which are associated with a certain position of the glass bubble, with the use of injection moulding, in that into the cavity (5, 12, 16, 21) of the upper part (1) of an injection moulding tool, a transparent material component (B) for the vial body (15) is injected in order to form the cavity around a core (8) of the lower part of the moulding tool, and in order to generate the markings (23) a second material component (A) in a contrasting colour is used, and is injection moulded around the core (8) of the lower part and/or around the cavity of the vial body (15), characterised in that the second material component (A) is guided into the region provided for the markings (23) by means of injection channels (7, 22), which radially penetrate the upper part (1) with respect to the axis of the core (8) and/or of the cavity and end at its inner wall congruently with the axial spacings of the marking regions.

2. Method according to claim 1, characterised in that the first material component (B) is so arranged for the vial body that it surrounds the second material component (A) for one or more markings (23).

3. Method according to claim 1, characterised in that the second material component (A) for the markings (23) is so arranged that it surrounds the first material component (B) for the vial body (15).

4. Method according to claim 1, characterised in that the second material component (A) for the markings (23) is so disposed that it penetrates the wall formed from the first material component (B) for the vial body (15) from the exterior to its cavity.

5. Method according to claim 2 or 4, characterised in that the material component (A) for the marking (23) and thereafter the material component (B) for the vial body (23) are injection moulded on and/or around the core (8) of the moulding tool.

6. Method according to claim 3 or 4, characterised in that the material component (B) for the vial body (15) and thereafter the material component (A) for the marking (23) are injection moulded on and/or around the core (8) of the moulding tool.

7. Method according to one of the preceding claims, wherein a moulding tool with two upper-part cavities (5, 12; 16, 21) each is used for the shape of the vial body (15) and its one or more markings (23), characterised by a first phase (Fig. 1; Fig. 3) in which the core (8) is moved into one of the two mould cavities (5, 12; 16, 21), the first cavity (5; 16) is closed and one of the two material components (A, B) is injection moulded on to and/or around the core (8), by a second phase in which this mould cavity (5; 16) is opened, the core (8) is withdrawn therefrom with the material component (A, B) injection moulded in the first phase and is displaced to the other mould cavity (12, 21), by a third phase (Fig. 2; Fig. 4) in which the core (8) is moved into the other mould cavity (12, 21), this is closed and the other material component (B, A) is injection moulded on to and/or around the core (8), and by a fourth phase in which the other second mould cavity (12, 21) is opened, the core (8) is removed therefrom with the two material components (B, A) and is released therefrom.

8. Method according to claim 7, characterised in that the release of the core is effected by constrained removal from the mould or via diminution of the core (8) in its volume and/or circumference.

9. Method according to one of the preceding claims, characterised in that for the two material components (A, B), plastics materials are used, which can be joined together by adhesion, injection moulding, welding, co-mingling and/or interdiffusion.

10. Injection moulding tool for carrying out the method according to one of the preceding claims, whose moulding element is formed by an upper part (1) having at least one or more cavities (5, 12; 16, 21) and a lower part having the core (8), characterised in that on the wall of the cavity, a plurality of respectively freely inwardly ending projections (19) or recesses (6) are formed, whose shape, position and/or contour corresponds to those of the markings (23), the projections (19) or recesses (6) being shaped to form annular cavities either in the cavity wall (5, 12; 16, 21) or in the material component injection moulded on to the core (8) for the vial body (15).

11. Tool according to claim 10, characterised in that the mould cavity (5; 16) is sealable by at least two slide elements (2, 3; 2a, 3a) which are movable towards one another and away from one another and which have the projections (19) or recesses (6) and are optionally formed to limit at least the long sides of the cavity (5; 16).

## Revendications

1. Procédé de fabrication d'une fiole de niveau à bulle, dont le corps (15) présente un espace creux destiné à recevoir un liquide contenant une bulle de gaz et porte des marques (23) décalées par rapport à un axe de l'espace creux et associées à une position déterminée de la bulle de gaz, le procédé utilisant le moulage par injection en injectant un composant de matériau (B) transparent pour le corps de fiole (15), dans la cavité (5, 12, 16, 21) de la partie supérieure (1) d'un moule d'outillage de moulage par injection, autour d'un noyau (8) de la partie inférieure du moule pour former l'espace creux, et en utilisant pour réaliser les marques (23), un second composant de matériau (A) de couleur contrastante, qui est injecté autour du noyau (8) de la partie inférieure et/ou autour de l'espace creux du corps de fiole (15), **caractérisé** en ce que le second composant de matériau (A) est amené dans les zones prévues pour les marques (23), au moyen de canaux d'injection (7, 22), qui traversent radialement par rapport à l'axe du noyau (8) et/ou de l'espace creux, la partie supérieure (1), et se terminent sur sa paroi intérieure de manière congruente aux distances de positionnement axiales des zones des marques.

2. Procédé selon la revendication 1, **caractérisé** en ce que le premier composant de matériau (B) pour le corps de fiole est placé de façon à entourer le second composant de matériau (A) pour ladite une marque ou les plusieurs marques (23).

3. Procédé selon la revendication 1, **caractérisé** en ce que le second composant de matériau (A) pour les marques (23) est placé de façon à entourer le premier composant de matériau (B) pour le corps de fiole (15).

4. Procédé selon la revendication 1, **caractérisé** en ce que le second composant de matériau (A) pour les marques (23) est placé de façon à traverser la paroi formée par le premier composant de matériau (B) pour le corps de fiole (15), de l'extérieur jusqu'à l'espace creux de ce dernier.

5. Procédé selon la revendication 2 ou 4, **caractérisé** en ce que l'on injecte sur et/ou autour du noyau (8) du moule, le composant de matériau (A) pour la marque (23), et ensuite le composant de matériau (B) pour le corps de fiole (15).

6. Procédé selon la revendication 3 ou 4, **caractérisé** en ce que l'on injecte sur et/ou autour du noyau (8) du moule, le composant de matériau (B) pour le corps de fiole (15), et ensuite le composant de matériau (A) pour la marque (23).

7. Procédé selon l'une des revendications précédentes, mettant en oeuvre un moule à deux cavités de partie supérieure (5, 12; 16, 21) respectivement pour la forme du corps de fiole (15) et sa marque ou ses plusieurs marques (23), **caractérisé** par une première phase (fig. 1; fig. 3) au cours de laquelle on déplace le noyau (8) dans l'une des deux cavités (5, 12; 16, 21), on ferme cette première cavité (5; 16) et on injecte sur et/ou autour du noyau (8) l'un des deux composants de matériau (A, B), par une seconde phase au cours de laquelle on ouvre cette cavité (5; 16), on en retire le noyau (8) avec le composant de matériau (A, B) injecté durant la première phase et on le transfère vers l'autre cavité (12; 21), par une troisième phase (fig. 2; fig. 4) au cours de laquelle le noyau (8) est déplacé dans l'autre cavité (12; 21), que l'on ferme, et on injecte sur et/ou autour du noyau (8) l'autre composant de matériau (B, A), et par une quatrième phase au cours de laquelle on ouvre l'autre, la seconde cavité (12; 21), on en retire le noyau (8) avec les deux composants de matériau (B, A) et on le sépare de ceux-ci.

8. Procédé selon la revendication 7, **caractérisé** en ce que la séparation est effectuée par démoulage forcé ou par une réduction du noyau (8) dans son volume et/ou sa périphérie.

9. Procédé selon l'une des revendications précédentes, **caractérisé** en ce que l'on utilise pour les deux composants de matériau (A, B), des matières plastiques, qui peuvent être liées mutuellement par adhésion, projection, soudage, mélange réciproque et/ou interdiffusion.

10. Outillage de moulage par injection pour la mise en oeuvre du procédé selon l'une des revendications précédentes, dont l'organe formant moule est formé par une partie supérieure (1) présentant au moins une ou plusieurs cavités (5, 12; 16, 21) et une partie inférieure présentant le noyau (8), **caractérisé** en ce que sur la paroi de la cavité sont réalisés plusieurs protubérances (19) ou creux (6) se terminant chacune ou chacun librement vers l'intérieur, dont la forme, la position et/ou le contour correspondent à ceux des marques (23), les protubérances (19) ou les creux (6) étant réalisés, pour former des espaces creux de type annulaire, soit dans la paroi de la cavité (5, 12; 16, 21), soit dans le composant de matériau (B) injecté sur le noyau (8) pour le corps de fiole (15).

11. Outillage selon la revendication 10, **caractérisé** en ce que la cavité (5; 16) peut être fermée au moins à l'aide de deux éléments coulissants (2, 3; 2a, 3a) qui peuvent coulisser de manière à se rapprocher et à s'éloigner l'un de l'autre, qui présentent les protubérances (19) ou les creux (6), et qui, le cas échéant, sont réalisés pour délimiter au moins les côtés longitudinaux de la cavité (5; 16).
